# EUROPEAN PATENT APPLICATION

(11) **EP 2 957 538 A1**
(43) Date of publication of application: **23.12.2015**
(21) Application number: 14752099.3
(22) Date of filing: 27.01.2014
(51) Int. Cl.: B66F 11/04, E04G 3/24, E04G 21/28, F03D 1/00, E04G 21/24

(54) **DEVICE FOR PROTECTING LIFTING PLATFORMS FOR MAINTAINING WIND GENERATORS**

(30) Priority: 12.02.2013 ES 201330176
(71) Applicant: Global Energy Services Siemsa S.A., 48950 Erandio (Vizcaya) (ES)
(72) Inventor: PALENCIA RIUS, Rafael, E-48950 Erandio (Vizcaya) (ES)
(74) Representative: Ungria López, Javier
(86) International application number: PCT/ES2014/070055
(87) International publication number: WO 2014/125142

(57) **Abstract**

The invention relates to a device for protecting lifting platforms for maintaining wind generators, formed by a frame (1) of a variable size, side laminar elements (2) in the form of walls for peripherally closing the frame (1), and upper laminar elements (3) that cover the upper area of the frame (1) in the form of a roof and consist of a flexible material, forming an opening (6) adaptable to the shape of the wind generator blade being revised, that passes therebetween. It includes an independent closing accessory that can be detachably fixed to the upper laminar elements (3) and adheres to the profile of the blade being revised by means of the fixing action of the suction pads (5) it comprises.

## Description

### OBJECT OF THE INVENTION

This invention refers to a device for protecting lifting platforms responsible for inspecting or repairing the blades of wind generators. These maintenance works are carried out periodically on wind generators to maintain their optimum state of performance.

### TECHNICAL PROBLEM TO ADDRESS AND BACKGROUND OF THE INVENTION

In recent times, renewable energies are taking on great importance, and the industry has a great interest in this type of clean energies, not only because they are easy to arrange, but also because they are widely accepted by society.

Currently, in the field of renewable energies, it is wind energy which is being developed more quickly than the rest and, consequently, is the one experiencing the greatest boom.

Owing to this boom, an increasing number of wind farms are being installed and, as a result, there is an increasing requirement for perfected equipment to inspect or repair the wind generators on said wind farms.

When talking about maintenance on wind farms, special mention should be given to maintenance of wind generators and, in particular, the blades thereof.

Said blades show damage caused both by mechanical effects and by the action of the meteorological conditions on them, making it necessary to inspect and/or repair them.

For inspection and/or repair of wind generator blades, lifting platforms like those described in the document ES 1072052 U are used.

The problem in using said platforms for maintenance of the wind generator blades is that their use is restricted to the periods of spring and summer, removing several months in which it is very complicated or practically impossible to carry out the maintenance operations because of inclement weather.

This invention is designed to solve this problem, which is not resolved in the current state of the art.

### DESCRIPTION OF THE INVENTION

This invention describes a device for protecting lifting platforms for maintaining wind generators, formed of a frame which provides rigidity to the assembly, a number of side laminar elements in the form of walls for peripherally closing the frame, and upper laminar elements which cover the upper area of the frame, in the form of a roof, forming an opening adaptable to the shape of the wind generator blade being revised, that passes between them. It also includes an independent closing accessory formed by a laminar strip of the same material as the upper laminar elements, an elastic strip joined to the laminar strip all along its length, as a continuation thereof, and an array of suction pads fixed along the length of the elastic strip, so that the closing accessory is attached to the upper laminar elements with a detachable fixture, typically a sail hook, and adheres to the profile of the blade being revised by means of the fixing action of the suction pads it comprises.

This system is incorporated in situations of rain, and creates a water-tight seal between the closing accessory and the blade being revised which prevents water from entering the protective device.

The side and upper laminar elements are detachable and are made of a flexible material.

The frame is formed of structural beams and elements in such a way that its final dimensions are variable according to the dimensions of the platform on which it is located and is firmly attached to it.

The device incorporates infrared lamps or any other method of heating, designed to raise the temperature and reduce the humidity of the air inside it, making the environmental conditions more favourable.

### BRIEF DESCRIPTION OF THE FIGURES

To complete the invention being described, and in order to help with better understanding of the characteristics of the invention, according to a preferred embodiment thereof, it is accompanied by a set of drawings in which the figures described below have been represented, for purely illustration purposes and without limitation.
Figure 1 represents an upper front perspective view of the frame of the protective device.
Figure 2 represents an upper front perspective view of the whole protective device, with an enlargement of the closing accessory which adjusts to the blade being revised, showing the laminar strip, the elastic strip and the suction pads with their adjusting elements. In the enlargement, the laminar strip has been represented to show it perpendicular to the elastic strip, which is its position once installed.

Provided below is a list of the references used in the figures:
1. Frame.
2. Side laminar protecting element.
3. Upper laminar protecting element.
4. Elastic strip.
5. Suction pads.
6. Opening for the blade to pass through.
7. Connectors.
8. Lever for fixing the elastic strip
9. Vacuum activation lever.
10. Laminar strip.

### DESCRIPTION OF A PREFERRED EMBODIMENT OF THE INVENTION

The object of this invention is based on a protecting device which is installed on a lifting platform used for the maintenance of wind generators, allowing the platform to be used even when the atmospheric conditions are unfavourable.

The description is based on a preferred embodiment focussed on wind generators with three blades, which are the most widely used, although this must not be restrictive, and there may be ways of adapting it to other types of wind generators if necessary.

When beginning the inspection or repair of a wind generator, one of the blades is placed in a vertical position, with the other two blades in a V shape. Typically, it is around these two blades that the cables from which the lifting platform hang, and through which the vertical movement is made, with the platform remaining around the blade awaiting revision, along which it moves vertically. The platform can also be hung from other parts of the wind generator, such as the hub or the nacelle, although this does not represent any alteration of the invention described.

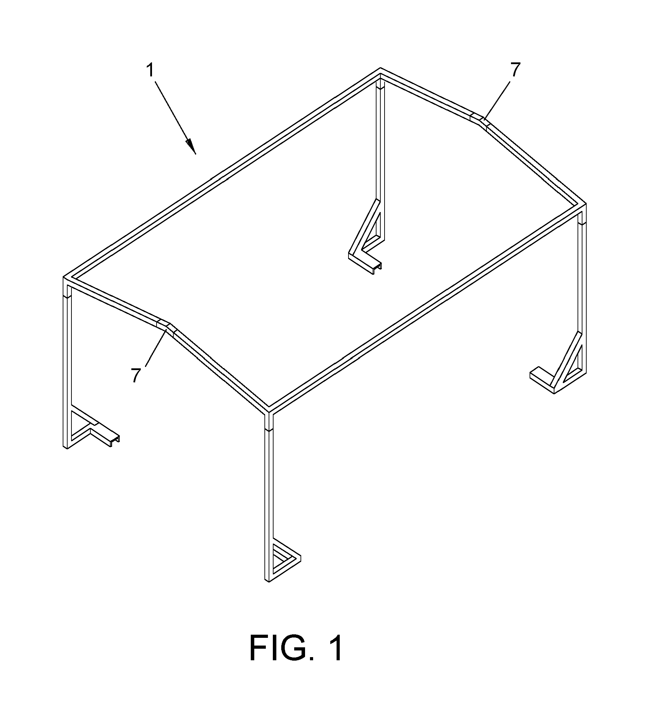

As shown in figure 1, the frame (1) is formed of four vertical posts, with the furthest apart being joined in parallel by two longitudinal beams. In parallel, the two posts closest to each other are joined by a further two beams positioned in an inverted V, the ends of which fit into a connector (7) which allows the length of the fitted end to be changed, so that the distance between the vertical posts is variable and adjusts to the size of the lifting platform on which they are installed.

The vertical posts are attached to each of the four corners of the platform. The vertical posts are formed of a vertical beam connected crosswise to another horizontal beam which is the one which fits into the platform structure, attached using fixing methods known in the state of the art.

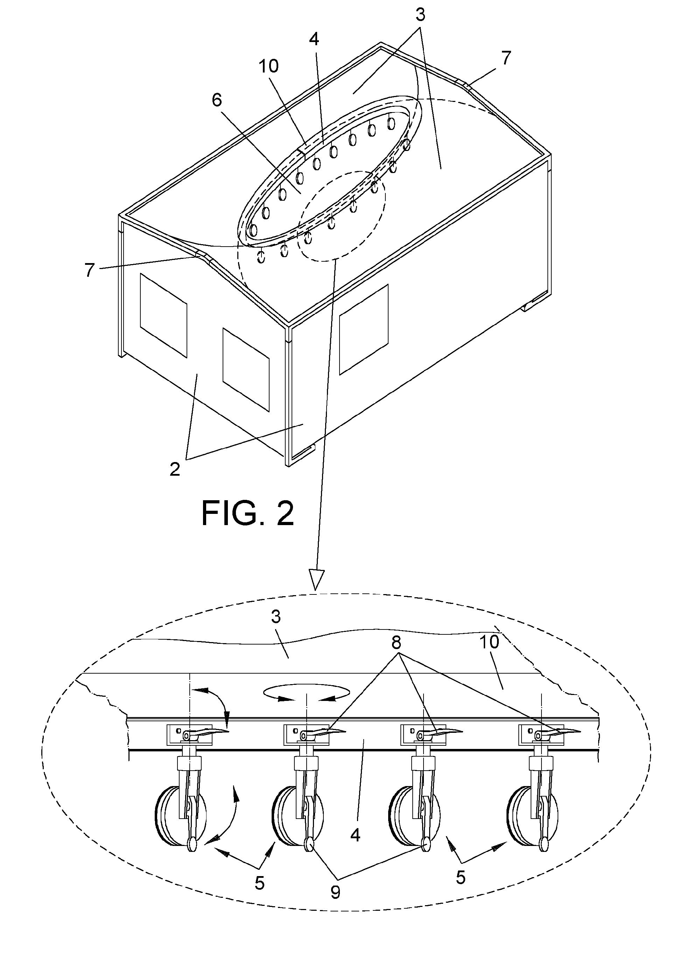

As shown in figure 2, laminar elements (2, 3) are attached to the frame (1) using detachable fixing methods, such as hook and loop attachment systems, clasps, clamps or similar, for protection or insulation. One is attached on the front part, one on the rear, one on each side and two on the upper side.

In a preferred embodiment, the laminar protecting elements, both lateral (2) and upper (3) are made of waterproof flexible canvas. The lateral laminar elements (2) have transparent areas, in the form of windows, to provide natural lighting.

The upper laminar elements (3) leave an adjustable opening (6) between them, through which the blade of the wind generator being revised can pass.

As shown in the enlargement in figure 2, there is a closing accessory, as an independent element, which is used in cases of rain to prevent water from entering the platform. This closing accessory comprises a laminar strip (10) manufactured in the same material as the upper laminar elements (3) and is attached along the whole length of an elastic strip (4) which has suction pads (5) along its length. The laminar strip (10) is attached to the upper laminar elements (3) with detachable fastenings, typically hook and loop attachment systems, incorporated in the laminar strip (10) it incorporates and to the blade which is being revised by means of suction pads (5) incorporated in the elastic strip (4), sealing the connection between the blade and the protector. The elastic strip (4) incorporates along its length, on the side which adheres to the blade, two rubber gaskets, not represented in the figures, one in the upper area and the other in its lower area, ensuring a sealed connection between the blade and the elastic strip (4).

As the platform moves vertically up or down, the upper laminar elements (3) adjust to the profile of the blade in such a way that, when the working position is reached, they practically follow the profile of the blade.

In rain situations, the laminar strips (10) are attached to the upper laminar elements (3) by means of detachable elements, which are not shown in the drawings. The suction pads (5) are then fixed to the blade with regard to the elastic strip (4) on which they are located, by means of fixing levers (8) which position them with the correct angle to the blade and the most appropriate distance. Once the suction pads (5) are in position, they are pressed against the blade, in turn activating a lever (9) located on them which activates the vacuum suction, creating the definitive attachment.

Before moving the platform to place it in a new working position, the closing accessory is disassembled by deactivating the vacuum levers (9) and the fixing levers (8) on the suction pads (5) and separating the closing accessory from the upper laminar elements (3), leaving the platform free to be moved along the length of the blade.

With the aim of conditioning the interior of the protecting device, infrared lamps or any other heating medium are installed, designed to increase the temperature and reduce the humidity inside the protecting device.

## Claims

1. Protecting device for lifting platforms for maintaining wind generators **characterised in that** it comprises:
- a frame (1) which provides rigidity to the assembly,
- side laminar elements (2) responsible for peripherally closing the frame, in the form of walls, and
- upper laminar elements (3) which cover the upper area of the frame (1), in the form of a roof,
where the upper laminar elements (3) are detachable, are made of flexible material and form an opening (6) which can be adapted to the shape of the blade passing between them.

2. Protecting device for lifting platforms for maintaining wind generators according to claim 1, **characterised in that** it includes an independent closing accessory which comprises:
- a laminar strip (10) made of the same material as the upper laminar elements (3),
- an elastic strip (4), attached to the laminar strip (10) along the whole length, as a continuation thereof,
- an array of suction pads (5) fixed along the length of the elastic strip (4),
in which the closing accessory is attached to the upper laminar elements (3) by means of a detachable fixing and adheres to the profile of the blade being revised through fixing of the suction pads (5) it incorporates.

3. Protecting device for lifting platforms for maintaining wind generators according to claim 1, **characterised in that** the frame (1) is formed of structural beams and connectors (7) so that its final dimensions are variable according to the dimensions of the platform on which it is located and is firmly attached to it.

4. Protecting device for lifting platforms for maintaining wind generators according to claims 1 and 2, **characterised in that** the side laminar elements (2) are made of flexible material and are detachable.

5. Protecting device for lifting platforms for maintaining wind generators according to the previous claims, **characterised in that** it incorporates heating means designed to increase the temperature and reduce the humidity inside the protecting device, so that the environmental conditions are more favourable.

6. Protecting device for lifting platforms for maintaining wind generators according to claim 3, **characterised in that** the heating means are infrared lamps.

## Amended claims

### Amended claims under Art. 19.1 PCT

**1.** Protecting device for lifting platforms for maintaining wind generators, **characterised in that** it comprises:
- a frame (1) which provides rigidity to the assembly,
- side laminar elements (2) responsible for peripherally closing the frame, in the form of walls, and
- upper laminar elements (3) which cover the upper area of the frame (1), in the form of a roof,
where the upper laminar elements (3) are detachable, are made of flexible material and form an opening (6) which can be adapted to the shape of the blade passing between them.

**2.** Protecting device for lifting platforms for maintaining wind generators according to claim 1, **characterised in that** it includes an independent closing accessory which comprises:
- a laminar strip (10) made of the same material as the upper laminar elements (3),
- an elastic strip (4), attached to the laminar strip (10) along the whole length, as a continuation thereof,
- an array of suction pads (5) fixed along the length of the elastic strip (4),
in which the closing accessory is attached to the upper laminar elements (3) by means of a detachable fixing and adheres to the profile of the blade being revised through fixing of the suction pads (5) it incorporates.

**3.** Protecting device for lifting platforms for maintaining wind generators according to claim 1, **characterised in that** the frame (1) is formed of structural beams and connectors (7) in such a way that its final dimensions are variable according to the dimensions of the platform on which it is located and is attached firmly to it.

**4.** Protecting device for lifting platforms for maintaining wind generators according to claim 1, **characterised in that** the side laminar elements (2) are made of flexible material and are detachable.

**5.** Protecting device for lifting platforms for maintaining wind generators according to the previous claims, **characterised in that** it incorporates heating means designed to increase the temperature and reduce the humidity inside the protecting device, so that the environmental conditions are more favourable.

**6.** Protecting device for lifting platforms for maintaining wind generators according to claim 5, **characterised in that** the heating means are infrared lamps.

Statement under Art. 19.1 PCT
Taking into account the defects detected which are referred to in the written opinion of the Administration responsible for the International Search, the applicant has made the following modifications regarding dependency in the set of claims:
Claim 4 has been replaced by the amended claim 4, which now depends on claim 1 and not on 1 and 2;
Claim 6 has been replaced by the amended claim 6, which now depends on claim 5 and not on 3;

The applicant has made the necessary amendments regarding dependency in the set of claims so that the aforementioned defects are eliminated.

Finally, the applicant states that the modifications are supported by the invention and are deduced clearly and unambiguously from it.
